# EUROPEAN PATENT APPLICATION

(11) **EP 4 141 474 A1**
(43) Date of publication of application: **01.03.2023**
(21) Application number: 21193139.9
(22) Date of filing: 25.08.2021
(51) Int. Cl.: G01S 7/48, G01S 7/481, G01S 17/42, G01S 17/58, G01S 17/66, G01S 17/89, G01S 17/931, G05D 1/02

(54) **SYSTEM FOR 3D SURVEYING BY AN AUTONOMOUS ROBOTIC VEHICLE USING LIDAR-SLAM AND AN ESTIMATED POINT DISTRIBUTION MAP FOR PATH PLANNING**

(71) Applicant: Hexagon Geosystems Services AG, 9435 Heerbrugg (CH)
(72) Inventor: HEINZLE, Lukas, CH-8820 Wädenswil (CH); GERSTER, Andreas, 72184 Eutingen (DE); GOHL, Pascal, 8400 Winterthur (CH)
(74) Representative: Kaminski Harmann

(57) **Abstract**

The invention relates to. a system for providing 3D surveying of an environment by an autonomous robotic vehicle (1). The system comprises a SLAM unit for carrying out a simultaneous localization and mapping process, a path planning unit to determine a path to be taken (31) by the autonomous robotic vehicle (1), and a lidar device (3) specifically foreseen to be mounted on the autonomous robotic vehicle (1). The lidar device (3) is configured to have a field-of-view of 360 degrees about a first axis (4) and 130 degrees about a second axis (6) perpendicular to the first axis and to generate the lidar data with a point acquisition rate of at least 300'000 points per second, which allows the SLAM unit to receive the lidar data as part of the perception data for the SLAM process. The path planning unit is configured to determine the path to be taken (31) by carrying out an evaluation of a further trajectory (30, 31) within a map of the environment in relation to an estimated point distribution map for an estimated 3D point cloud, which is provided by the lidar device (3) on the further trajectory (30, 31) and projected onto the map of the environment.

## Description

The present invention relates to a system for providing 3D surveying of an environment by an autonomous robotic vehicle.

By way of example, three-dimensional surveying is used to assess an actual condition of an area of interest, e.g. a restricted or dangerous area such as a construction site, an industrial plant, a business complex, or a cave. The outcome of the 3D surveying may be used to efficiently plan next work steps or appropriate actions to react on a determined actual condition.

Decision making and planning of work steps is further aided by means of a dedicated digital visualization of the actual state, e.g. in the form of a point cloud or a vector file model, or by means of an augmented reality functionality making use of the 3D surveying data.

3D surveying often involves optically scanning and measuring an environment by means of a laser scanner, which emits a laser measurement beam, e.g. using pulsed electromagnetic radiation. By receiving an echo from a backscattering surface point of the environment a distance to the surface point is derived and associated with an angular emission direction of the associated laser measurement beam. This way, a three-dimensional point cloud is generated. For example, the distance measurement may be based on the time of flight, the shape, and/or the phase of the pulse.

For additional information, the laser scanner data may be combined with camera data, in particular to provide high-resolution spectral information, e.g. by means of an RGB camera or an infrared camera.

However, acquiring the 3D data can be cumbersome and in some cases even dangerous for a human worker. Often, access to a specific area is prohibited or severely restricted for a human worker.

Nowadays, robotic vehicles, particularly autonomous robotic vehicles, are increasingly used to facilitate data acquisition and to reduce risks on human workers. 3D surveying devices used in combination with such robotic vehicles are typically configured to provide surveying data during movement of the robotic vehicle, wherein referencing data provide information on a trajectory of a data acquisition unit, e.g. position and/or pose data, such that surveying data acquired from different positions of the data acquisition unit can be combined into a common coordinate system.

The 3D surveying data may then be analyzed by means of a feature recognition algorithm for automatically recognizing semantic and/or geometric features captured by the surveying data, e.g. by means of using shape information provided by virtual object data from a CAD model. Such feature recognition, particularly for recognizing geometric primitives, are nowadays widely used to analyze 3D data.

Many different types of autonomous robotic vehicles are known. For example, ground based robotic vehicles may have a plurality of wheels for propelling the robot, typically having sophisticated suspension to cope with different kinds of terrain. Another widely used type is a legged robot, e.g. a four-legged robot, which is often able to handle tough terrain and steep inclines. Aerial robotic vehicles, e.g. quadcopter drones, allow further versatility to survey areas that are difficult to access, but often to the expense of less surveying time and/or sensor complexity due to limited often load capacity and battery power.

Unmanned Arial Vehicles (UAV) and Unmanned Ground Vehicles (UGV) are for themselves state-of-the-art platforms for multilateral use. Equipped with imaging and lidar sensors, these platforms provide for autonomous path planning and for autonomously moving an acquisition unit for acquiring 3D surveying and reality capture data.

For movement control and path planning, the autonomous robotic vehicle is often configured to autonomously create a 3D map of a new environment, e.g. by means of a simultaneous localization and mapping (SLAM) functionality, using data from sensors of the robotic vehicle.

In the prior art, movement control and path planning for the surveying campaign are predominantly governed by making use of inbuilt visual perception sensors of the autonomous robot. Acquisition and use of 3D surveying data are typically decoupled from acquisition and use of control data to move the robot.

In prior art robotic vehicles, often a tradeoff has to be made between field-of-view and viewing distance on the one side and reactivity (e.g. for obstacle detection and initiating an evasive maneuver) on the other side, which limits movement speed of the robot. Often, the robot only "sees" its immediate surroundings, which provides efficient reactivity to cope with obstacles and terrain changes, while larger scale path control is provided by predefined environment models and guiding instructions. For example, this limits applicability of mobile 3D surveying by autonomous robotic vehicles in unknown terrain. In known terrain predefining paths to be followed is cumbersome and often involves skilled personnel to take into account various measurement requirements such as a desired point density, measurement speed, or measurement accuracy.

It is therefore an object of the present invention to provide an improved system for mobile 3D surveying, which has increased applicability.

A further object is to provide a mobile 3D surveying system, which is easier to handle and can be used by a wide range of operators, also operators without special training.

These objects are achieved by realizing at least part of the features of the independent claims. Features which further develop the invention in an alternative or advantageous manner are described in the dependent patent claims.

The invention relates to a system for providing 3D surveying of an environment by an autonomous robotic vehicle. The system comprises a simultaneous localization and mapping unit, referred to as SLAM unit, configured to carry out a simultaneous localization and mapping process, referred to as SLAM process. The SLAM process comprises reception of perception data, which provide a representation of the surroundings of the autonomous vehicle at a current position, use of the perception data to generate a map of an environment, and determination of a trajectory of a path that the autonomous vehicle has passed within the map of the environment. The system further comprises a path planning unit, configured to determine a path to be taken by the autonomous robotic vehicle based on the map of the environment. A lidar device specifically foreseen to be mounted on the autonomous robotic vehicle is configured to generate lidar data to provide a coordinative scan of the environment relative to the lidar device, wherein the system is configured to generate the lidar data during a movement of the lidar device and to provide a referencing of the lidar data with respect to a common coordinate system for determining a 3D survey point cloud of the environment.

According to one aspect of the invention, the lidar device is configured to have a field-of-view of 360 degrees about a first axis and 130 degrees about a second axis perpendicular to the first axis and to generate the lidar data with a point acquisition rate of at least 300'000 points per second. The SLAM unit is configured to receive the lidar data as part of the perception data and, based thereof, to generate the map of the environment and to determine the trajectory of the path that the autonomous vehicle has passed within the map of the environment. In order to determine the path to be taken, the path planning unit is configured to carry out an evaluation of a further trajectory within the map of the environment in relation to an estimated point distribution map for an estimated 3D point cloud, which is (i.e. would be) provided by the lidar device on the further trajectory and projected onto the map of the environment.

Thanks to the use of the lidar data both as perception data and for generating the 3D survey point cloud, the system allows a continuous capture of 3D surveying data, while at the same time providing an enhanced field-of-view and viewing distance for path planning.

In one embodiment, the lidar device is embodied as laser scanner, which is configured to generate the lidar data by means of a rotation of a laser beam about two rotation axes. The laser scanner comprises a rotating body configured to rotate about one of the two rotation axes and to provide for a variable deflection of an outgoing and a returning part of the laser beam, thereby providing a rotation of the laser beam about the one of the two rotation axes, which is often referred to as fast axis. The rotating body is rotated about the fast axis with at least 50 Hz and the laser beam is rotated about the other of the two rotation axes, often referred to as slow axis, with at least 0.5 Hz, wherein the laser beam is emitted as pulsed laser beam, e.g. wherein the pulsed laser beam comprises 1.5 million pulses per second. For the rotation of the laser beam about the two axes the field-of-view about the fast axis is 130 degrees and about the slow axis 360 degrees.

By way of example, the laser scanner is foreseen to be mounted on the autonomous robotic vehicle that the slow axis is essentially vertical, such that the 130-degree FoV for the rotation about the fast axis provides to observe the front, the ground, and the back of the autonomous robotic vehicle.

For example, the evaluation of the further trajectory in relation to the estimated point distribution map comprises voxel occupancy grid navigation and a probabilistic robotic framework for path planning which is directly fed with the lidar data and trajectory points of the determined trajectory.

In a further embodiment, the path planning unit is configured to receive an evaluation criterion defining different measurement specifications of the system, e.g. different target values for the survey point cloud, and to take into account the evaluation criterion for the evaluation of the further trajectory.

By way of example, the evaluation criterion defines at least one of: a point density of the survey point cloud projected onto the map of the environment, e.g. at least one of a minimum, a maximum, and a mean point density of the survey point cloud projected onto the map of the environment; an energy consumption threshold, e.g. a maximum allowable energy consumption, for the system for completing the further trajectory and providing the survey point cloud; a time consumption threshold, e.g. a maximum allowable time, for the system for completing the further trajectory and providing the survey point cloud; a path length threshold, e.g. a minimal path length and/or a maximum allowable path length, of the further trajectory; a minimal area of the trajectory to be covered; a minimal spatial volume covered by the survey point cloud; and a minimum or maximum horizontal angle between a heading direction at the end of the trajectory of the path that the autonomous vehicle has passed and a heading direction at the beginning of the further trajectory.

In a further embodiment, the path planning unit is configured to receive a path of interest and is configured to optimize and/or extend the path of interest to determine the path to be taken. For example, the path of interest is generated and provided by another surveying device, e.g. a mobile reality capture device having a SLAM functionality.

For exploration of an unknown area, e.g. along the path of interest, the path planning may include a boundary follow mode, wherein the further trajectory follows a boundary, e.g. given by a wall, in a defined distance. The further trajectory may also include regular or random movements or direction changes, e.g. random loops, within the boundary. Vertical movement may be restricted, e.g. to ensure that the autonomous robotic vehicle stays on a particular floor to explore everything on that floor.

By way of example, a decision tree involving a defined decision basis (e.g. random left/right decisions or always choosing left or right) is build up, wherein the decision tree returns after a defined number of sub-nodes to the top node, after which another decision basis is used. For example, decisions may be based on likelihood estimations for an already scanned path/environment associated with an already followed path section of the further trajectory.

In order to provide for sufficient data processing power, the system may have connection means for data exchange with a data cloud which provides for cloud computing, e.g. to determine the 3D survey point cloud or to carry out at least part of the processing for the evaluation of the further trajectory. The system can profit from on-board computing, e.g. by means of a dedicated computing unit provided with the lidar device or by means of a computing unit of the autonomous robotic vehicle, which significantly extends computing capabilities in case connection to the cloud is lost or in case data transfer rate is limited. Another possibility is the inclusion of a connectivity to a companion device, e.g. a tablet, which could be configured to determine the 3D survey point cloud or to carry out at least part of the processing for the evaluation of the further trajectory similar than the cloud processing. The local companion device could then take over processing for areas where there is limited or no connectivity to the cloud, or the local companion device could serve as a cloud interface in the sense of a relay between on-board computing and cloud computing. By way of example, switching between on-board computing, cloud processing, and processing by the companion device is carried out dynamically as a function of connectivity between the three processing locations.

In one embodiment, the system comprises an on-board computing unit specifically foreseen to be located on the autonomous robotic vehicle and configured to carry out at least part of a system processing, wherein the system processing comprises carrying out the SLAM process, providing the referencing of the lidar data, and carrying out the evaluation of the further trajectory. The system further comprises an external computing unit configured to carry out at least part of the system processing. A communication module of the system is configured to provide for a communication between the on-board computing unit and the external computing unit, wherein the system comprises a workload selection module configured to monitor an available bandwidth of the communication module for the communication between the on-board computing unit with the external computing unit, to monitor an available power of the on-board computing unit, the lidar device, the SLAM unit, and the path planning unit, and to dynamically change an assignment of at least part of the system processing to the on-board computing unit and the external computing unit depending on the available bandwidth and the available power assigned to the external processing unit.

A further aspect of the invention relates to the use of a predefined trajectory information associated with a reference object in the environment, e.g. a dedicated landmark, a dedicated corner of a building, and the like. Alternatively, or in addition, the reference object may be an artificial marking object to provide predefined trajectory information.

For example, the reference object is located in a path planning software and associated with a predefined trajectory information. The predefined trajectory information is made by a human operator or an intelligent optimization algorithm. In case an artificial marking object is used, a corresponding real marking object is (physically) generated, e.g. printed, and placed in the area to be scanned. Upon detection of the reference object in the field, the path planning unit of the system then associates the detected reference object with the predefined trajectory information and uses the trajectory information as input for the evaluation of the further trajectory, by performing a frame transformation between the real world and the "planned world".

Accordingly, in a further embodiment, the system is configured to access identification information of a reference object and assignment data, wherein the assignment data provide for an assignment of the reference object to a trajectory specification within the vicinity of the reference object. For example, the trajectory specification is a further heading direction with respect to an outer coordinate system or with respect to a cardinal direction. The system comprises a reference object detector configured to use the identification information and, based thereof, to provide a detection of the reference object within the environment. By way of example, the reference object detector is configured to provide the detection of the reference object by means of camera and/or lidar data and visual detection attributes associated to the reference object. Upon the detection of the reference object the path planning unit is configured to take into account the trajectory specification in the evaluation of the further trajectory.

In a further embodiment, the system is configured to access a 3D reference model of the environment, e.g. in the form of a CAD model, wherein the trajectory specification is provided relative to the 3D reference model, particularly wherein the trajectory specification provides a planned path within the 3D reference model. The assignment data provide an assignment of the reference object to a position within the 3D reference model and the system is configured to determine a frame transformation between the map of the environment and the 3D reference model by taking into account the assignment of the reference object to the position within the 3D reference model.

By way of example, a planning map used in the path planning software is based on a previously recorded reality capture scan, e.g. by the system or another mobile surveying system for 3D surveying of an environment such as the Leica BLK2GO device. The planning map could be a digital model, which by a simulator is converted into a "machine readable" map consisting of image and LiDAR features, which can be matched by the system. For example, the lidar 3D points are directly converted into voxel based occupancy maps, which can be used for path planning and collision avoidance.

Another aspect of the invention relates to the use of fiducials for controlling the system, particularly the movement of the autonomous robotic vehicle. By way of example, the system comprises a known, i.e. teached, list of fiducial markers with corresponding actions. If a fiducial marker is detected, the corresponding action is triggered. For example, a user can then dynamically instruct actions to be taken by the system, e.g. without having direct access to the system (no physical contact) or a main system control.

In one embodiment, the system comprises a fiducial marker configured to provide an indication of a local trajectory direction relative to the fiducial marker, e.g. a visible mark providing for visual determination of the local trajectory direction. The system comprises a fiducial marker detector configured to detect the fiducial marker and to determine the local trajectory direction, e.g. by identifying visual attributes such as lines or arrows which provide the local trajectory direction or wherein the local trajectory direction is encoded in a visible code, e.g. a barcode or matrix barcode, which is read by the fiducial marker detector. The path planning unit is then configured to take into account the local trajectory direction in the evaluation of the further trajectory.

By way of example, the fiducial marker is configured to provide an, e.g. visible, indication of the directions of at least two, particularly three, of the three main axes which span the common coordinate system, wherein the system is configured to determine the directions of the three main axes by using the fiducial marker detector and to take into account the directions of the three main axes for providing the referencing of the lidar data with respect to the common coordinate system.

In a further embodiment, the fiducial marker comprises a reference value indication, which provides positional information, e.g. 3D coordinates, regarding a set pose of the fiducial marker in the common coordinate system or in an outer coordinate system, e.g. a world-coordinate system. The set pose is a 6DoF pose, i.e. position and orientation of the fiducial marker, and indicates the desired 6DoF pose of the marker. Thus, when correctly placed in the environment, this marker can act as so-called survey control point, e.g. for so-called loop closure of a SLAM process and/or as absolute reference in a world coordinate system or a local site coordinate system.

Here, the system is configured to derive the set pose and to take into account the set pose to determine the local trajectory direction, e.g. by determining a pose of the fiducial marker in the common coordinate system or in the world coordinate system and carrying out a comparison of the determined pose of the fiducial marker and the set pose. For example, the comparison is taken into account for the providing of the referencing of the lidar data with respect to the common coordinate system, which may lead to an improved determination of the local trajectory direction.

In another embodiment, the fiducial marker is configured to provide an indication of a corresponding action to be carried out by the system, wherein the system is configured to determine the corresponding action by using the fiducial marker detector, e.g. wherein the indication of the corresponding action is provided by a visible code, particularly a barcode, more particularly a matrix barcode.

In one embodiment, the corresponding action is at least one of: a stop operation of the system, a pause operation of the system, a restart operation of the system, e.g. a start of a new capture/job (segmentation), a return to an origin of a measurement task, an omission of entering an area in the vicinity of the fiducial marker, and a time-controlled entry into an area in the vicinity of the fiducial marker. In particular, the path planning unit is configured to take into account the corresponding action in the evaluation of the further trajectory.

In a further embodiment, the fiducial marker comprises a visually detectable pattern, e.g. provided by areas of different reflectivity, different gray scales and/or different colors. The system is configured to determine a 3D orientation of the pattern by determining geometric features in an intensity image of the pattern and carrying out a plane fit algorithm in order to determine an orientation of a pattern plane. The intensity image of the pattern is acquired by a scanning of the pattern with a lidar measurement beam of the lidar device and a detection of an intensity of a returning lidar measurement beam. The 3D orientation of the pattern can then be determined by analyzing an appearance of the geometric features in the intensity image of the pattern.

Optionally, a distance to the pattern is derived, e.g. by using the lidar device, which, for example, may be beneficial to determine a 6DoF pose of the pattern, i.e. the 3D position and the 3D orientation of the pattern plane.

In a further embodiment, the pattern comprises a circular feature and the system is configured to identify an image of the circular feature within the intensity image of the pattern. The plane fit algorithm is configured to fit an ellipse to the image of the circular feature and, based thereof, to determine the orientation of the pattern plane.

By way of example, in addition the center of the ellipse is determined and aiming information for aiming with the lidar measurement beam to the center of the ellipse are derived. This aiming information may then be used as aiming point reference for aiming the lidar measurement beam in order to derive the distance to the pattern, e.g. for determining a 6DoF pose of the pattern.

In a specific embodiment, the pattern comprises inner geometric features, particularly comprising rectangular features, which are enclosed by the circular feature, more particularly wherein the inner geometric features are configured to provide the indication of the local trajectory direction and the system is configured to determine the local trajectory direction by analyzing the intensity image of the pattern and by taking into account the 3D orientation of the pattern.

A further aspect of the invention relates to a calibration of the lidar device to evaluate an alignment of the optics of the lidar device, e.g. after a shock or a tumble of the autonomous robotic vehicle.

Accordingly, in a further embodiment, the system is configured to use the scanning of the pattern with the lidar device and the detection of the intensity of the returning lidar measurement beam to determine a first geometric shape of the pattern, to carry out a comparison of the first geometric shape with an expected shape of the pattern, particularly by taking into account the orientation of the pattern plane, more particularly the 3D orientation of the pattern, and, based thereof, to carry out an evaluation, particularly a determination, of an optical alignment of the optics of the lidar device.

In a further embodiment, the system comprises a camera specifically foreseen to be mounted on the autonomous robotic vehicle and configured to generate camera data during a movement of the camera. The system is configured to image the pattern by the camera and to determine a second geometric shape of the pattern, to carry out a comparison of the second geometric shape with the expected shape of the pattern, particularly by taking into account the orientation of the pattern plane, more particularly the 3D orientation of the pattern, and to take into account the comparison of the second geometric shape with the expected shape of the pattern in the evaluation, particularly the determination, of the optical alignment of the optics of the lidar device.

In a further embodiment, the system is configured to carry out a system monitoring comprising a measurement of bumps and/or a vibration of the lidar device, and to automatically carry out the evaluation, particularly the determination, of the optical alignment of the optics of the lidar device as a function of the system monitoring.

In a further embodiment, the system is configured to use data of an inertial measuring unit and/or data of an image pickup unit to provide the referencing of the lidar data with respect to the common coordinate system, and/or to generate the map of the environment and to determine the trajectory of the path that the autonomous vehicle has passed within the map of the environment.

The system may further be configured to make use of a network of autonomous robotic devices, e.g. providing for gap filling and providing additional information for the surveying task and/or for path planning. By way of example, in a further embodiment, the system is configured to receive an additional map of the environment generated by means of another SLAM process associated with another autonomous robotic vehicle and the evaluation of the further trajectory takes into account the additional map of the environment by evaluating an estimated point distribution map for an estimated 3D point cloud provided by the lidar device on a trajectory segment of the further trajectory within the additional map of the environment and projected onto the additional map of the environment.

The system according to the different aspects of the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: an exemplary embodiment of an autonomous robotic vehicle equipped with a lidar device according to the invention;
- Fig. 2:: an exemplary workflow of using an autonomous robotic vehicle according to the invention;
- Fig. 3:: an exemplary embodiment of the lidar device as two-axis laser scanner;
- Fig. 4:: exemplary communication schemes between different components of the system according to the invention;
- Fig. 5:: an exemplary schematic of a path planning software making use of a reference object according to the invention;
- Fig. 6:: an exemplary use of fiducial markers according to the invention;
- Fig. 7:: an exemplary embodiment of a fiducial marker according to the invention.

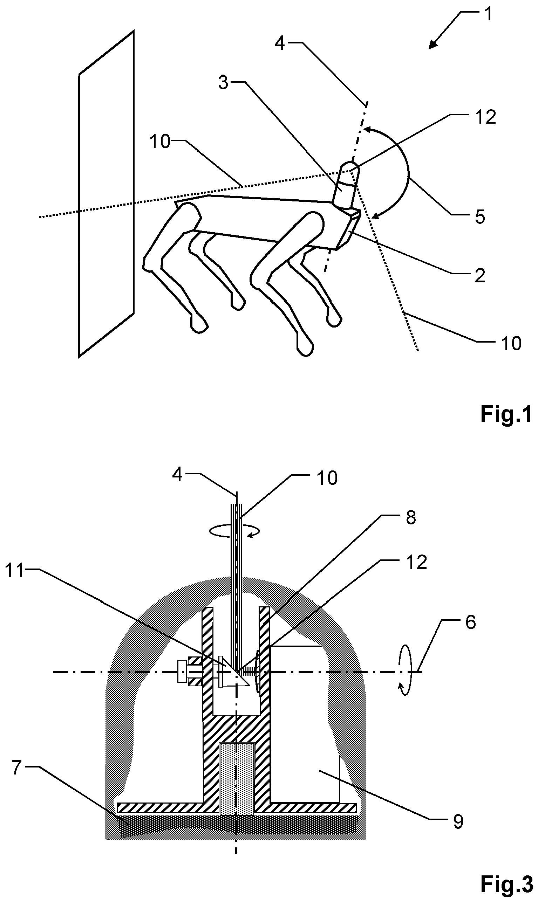

**Figure 1** depicts an exemplary embodiment of an autonomous robotic vehicle equipped with a lidar device to be used in a system for providing 3D surveying according to the invention. Here, the robotic vehicle 1 is embodied as a four-legged robot. For example, such robots are often used in unknown terrain with different surface properties having debris and steep inclines. The robot 1 has sensors 2 and processing capabilities to provide for simultaneous localization and mapping, which comprises reception of perception data providing a representation of the surroundings of the autonomous robot 1 at a current position, use of the perception data to generate a map of the environment, and determination of a trajectory of a path that the robot 1 has passed within the map of the environment.

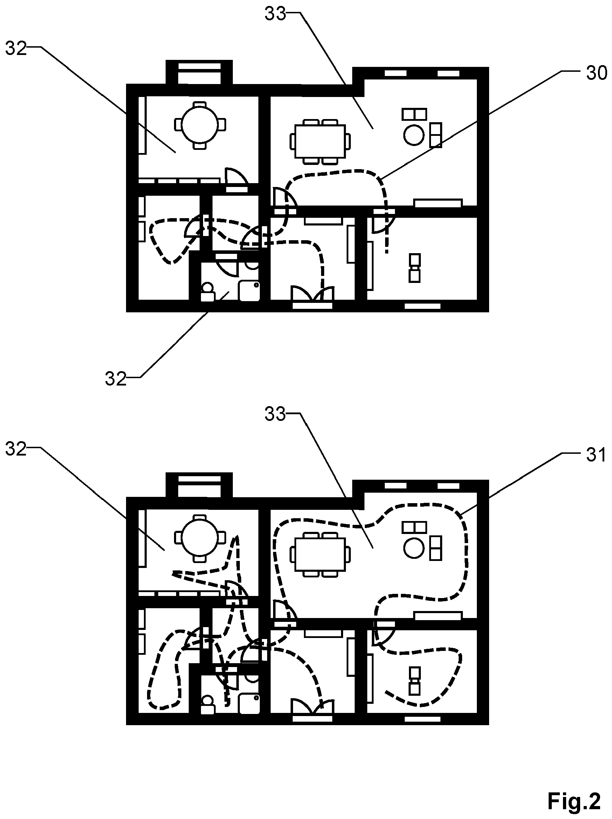

According to one aspect of the invention, the robot is equipped with a lidar device 3, which has a field-of-view of 360 degrees about a vertical axis 4 and a vertical field-of-view 5 of at least 130 degrees about a horizontal axis (see Fig. 2), wherein the lidar device is configured to generate the lidar data with a point acquisition rate of at least 300'000 points per second. Here, the lidar device is exemplarily embodied as so-called two-axis laser scanner (see Fig. 2), wherein the vertical axis 4 is also referred to as slow axis and the horizontal axis is also referred to as fast axis.

The SLAM unit is configured to receive the lidar data as the perception data, which, for example, provides improved field-of-view and viewing distance and thus improved larger scale path determination. For example, this particularly beneficial for exploring unknown terrain. Another benefit comes with the all-around horizontal field-of-view about the vertical axis 4 and the vertical field-of-view 5 of 130 degrees about the horizontal axis, which provides the capability to essentially cover the front, the back, and the ground at the same time.

The system, comprising the legged robot 1 and the lidar device 3, further comprises a path planning unit, configured to carry out an evaluation of a further trajectory within the map of the environment in relation to an estimated point distribution map for an estimated 3D point cloud, which is provided by the lidar device 3 on the further trajectory and projected onto the map of the environment.

By way of example, a potential further trajectory is provided by an external source and the system is configured to optimize and/or extend (e.g. explore more rooms) the potential further trajectory, e.g. to provide a desired point distribution when generating lidar data on an optimized further trajectory. The further trajectory may also be determined "from scratch", e.g. by using an algorithm configured to optimize distances to the walls and/or by implementing optimization principles based on so-called watertight probabilistic occupancy maps and dense maximum-likelihood occupancy voxel maps.

An exemplary workflow of using an autonomous robotic vehicle according to the invention is depicted by **figure 2****,** schematically showing a building floor to be surveyed, wherein a path of interest (30), e.g. a potential further trajectory is provided by a mobile reality capture device (top part of figure).

For example, the potential further trajectory is a recorded trajectory of a mobile surveying device which has previously measured the environment or a trajectory through setup points of a total station, e.g. wherein the total station includes a camera and a SLAM functionality to determine a movement path of the total station.

In the exemplary workflow depicted by the figure, a user walks through the building and thereby roughly surveys the environment by using a handheld mobile mapping device such as the BLK2GO reality capture device of Leica Geosystems, thereby defining the path of interest 30, i.e. the trajectory taken by the BLK2GO device.

As depicted in the bottom part of the figure, the autonomous robot then follows the path of interest 30 (post mission or live while the user is leading with the BLK2GO) on an optimized trajectory 31, which provides optimal point coverage of the lidar device, e.g. wherein distances to walls and objects within the environment are optimized and wherein open spaces and additional rooms along the path of interest are explored.

The optimized trajectory 31 includes sections associated with exploration areas 32, e.g. areas which have been omitted by the user or where inaccessible for the user when he was surveying the building with the mobile reality capture device. Other sections of the optimized trajectory 31 relate to rooms 33 where the user has chosen a bad trajectory to generate a desired quality of the point cloud. For example, the optimized trajectory 31 differs from the initially provided path of interest 30 in that an optimized trajectory is used to improve point density and room coverage by reducing hidden areas due to line-of-sight obstruction.

**Figure 3** shows an exemplary embodiment of the lidar device 3 of Fig. 1 in the form of a so-called two-axis laser scanner. The laser scanner comprises a base 7 and a support 8, the support 8 being rotatably mounted on the base 7 about the vertical axis 4. Often the rotation of the support 8 about the vertical axis 4 is also called azimuthal rotation, regardless of whether the laser scanner, or the vertical axis 4, is aligned exactly vertically.

The core of the laser scanner is an optical distance measuring unit 9 arranged in the support 8 and configured to perform a distance measurement by emitting a pulsed laser beam 10, e.g. wherein the pulsed laser beam comprises 1.5 million pulses per second, and by detecting returning parts of the pulsed laser beam by means of a receiving unit comprising a photosensitive sensor. Thus, a pulse echo is received from a backscattering surface point of the environment, wherein a distance to the surface point can be derived based on the time of flight, the shape, and/or the phase of the emitted pulse.

The scanning movement of the laser beam 10 is carried out by rotating the support 8 relative to the base 7 about the vertical axis 4 and by means of a rotating body 11, which is rotatably mounted on the support 8 and rotates about the horizontal axis 6. By way of example, both the transmitted laser beam 10 and the returning parts of the laser beam are deflected by means of a reflecting surface integral with the rotating body 11 or applied to the rotating body 11. Alternatively, the transmitted laser radiation is coming from the side facing away from the reflecting surface, i.e. coming from the inside of the rotating body 11, and emitted into the environment via a passage area within the reflecting surface (see below).

For the determination of the emission direction of the distance measuring beam 10 many different angle determining units are known in the prior art. For example, the emission direction may be detected by means of angle encoders, which are configured for the acquisition of angular data for the detection of absolute angular positions and/or relative angular changes of the support 8 or of the rotating body 11, respectively. Another possibility is to determine the angular positions of the support 8 or the rotating body 11, respectively, by only detecting full revolutions and using knowledge of the set rotation frequency.

A visualization of the data can be based on commonly known data processing steps and/or display options, e.g. wherein the acquired data is presented in the form of a 3D point cloud or wherein 3D vector file model is generated.

The laser scanner is configured to ensure a total field of view of the measuring operation of the laser scanner of 360 degrees in an azimuth direction defined by the rotation of the support 8 about the vertical axis 4 and at least 130 degrees in a declination direction defined by the rotation of the rotating body 11 about the horizontal axis 6. In other words, regardless of the azimuth angle of the support 8 about the vertical axis 4, the laser beam 10 can cover a vertical field of view 5 spread in the declination direction with a spread angle of at least 130 degrees.

By way of example, the total field of view typically refers to a central reference point 12 of the laser scanner defined by the intersection of the vertical axis 4 with the horizontal axis 6.

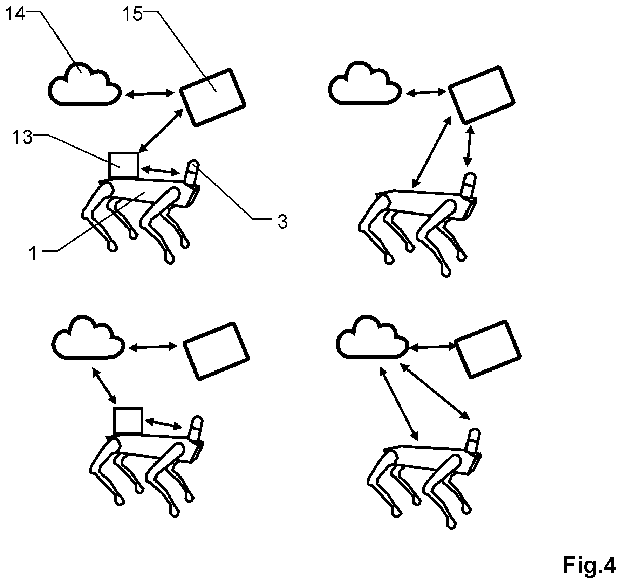

**Figure 4** exemplarily shows different communication and data processing schemes implemented by the different embodiments of the system.

Processing can take place on an on-board computing unit, e.g. a dedicated computing unit 13 specifically mounted for that purpose on the autonomous robot 1 or a computing unit provided by the robot 1 itself. Processing may also be executed by means of cloud computing 14 and on a companion device 15, e.g. a tablet.

For example, as depicted by the two schemes on the left part of the figure, a dedicated on-board computing unit 13 extends local computing capabilities, while at the same time the dedicated on-board computing unit 13 can be connected to a local operator companion device 15 for areas where the system has no connectivity (top left of the figure), or can serve as a cloud interface to the data cloud 14 in order to enable cloud computing (bottom left of the figure). Alternatively, the lidar device 3 is configured to carry out at least part of the processing, e.g. to calculate the trajectory, and to locally communicate with the companion device 15, which serves as cloud interface and/or carries out further processing steps (top right of the figure). The lidar device 3 may also be directly linked to the cloud 14 (bottom right of the figure), wherein processing is distributed dynamically by the cloud 14.

Switching between on-board computing, cloud processing, processing by the lidar device, and processing by the companion device is carried out dynamically as a function of connectivity between the computing locations and available power on the mobile robot 1. Typically, whenever possible processing is taken away from the mobile robot, e.g to the cloud and/or the companion device, because battery power and data storage of the mobile robot 1 and the devices located on the robot are limited.

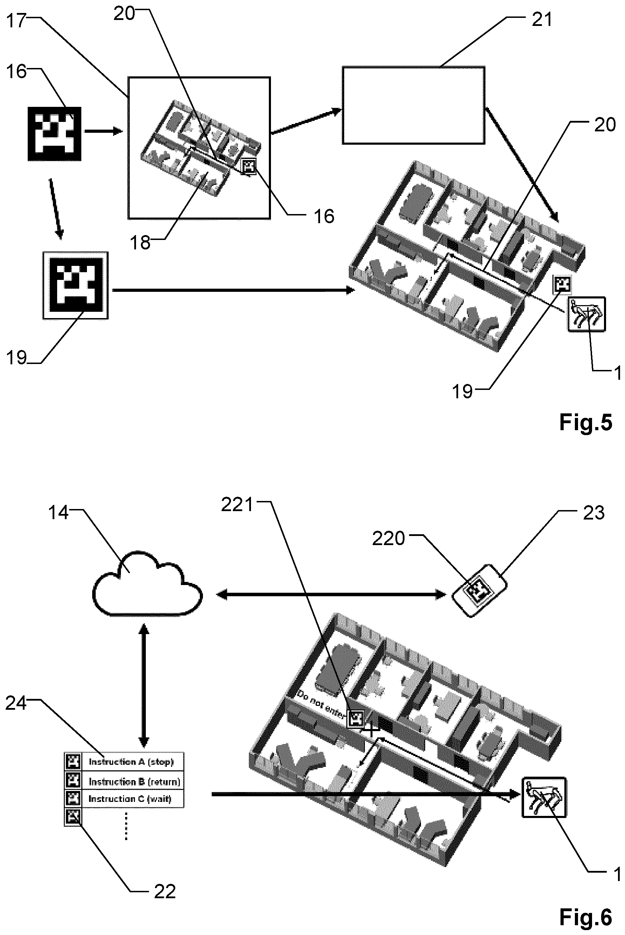

**Figure 5** schematically depicts a path planning software making use of a reference object 16. Only one reference object 16 is required for the principle to work. However, multiple reference objects 16 allow for a more accurate localization.

A reference object 16 is virtually introduced in a planning software 17 comprising a digital model 18 of the environment, e.g .a CAD model. A physical counterpart 19 to that virtual reference object 16, e.g. in the form of a matrix barcode, is generated and placed in the real environment. In the planning software a further path 20 within the digital model 18 is associated with the virtual reference object 16 such that control data for the robot 1 can be derived therefrom, which allow to localize the robot 1 in the real environment and to instruct the robot 1 to follow the further path 20 in the real environment. Thus, a planned path can serve as input to the robot control software 21.

For example, upon visual detection of the real reference object 19, here in the form of a matrix barcode, the path planning unit associates the detected reference object 19 with the predefined further path 20 and uses predefined trajectory information as input for the evaluation of the further trajectory, e.g. by performing a frame transformation between the real world and the "planned world".

**Figure 6** schematically depicts an exemplary use of fiducial markers according to the invention. By way of example, the robot is provided with a known list of fiducial markers 22 with corresponding actions. If a fiducial marker 22 is detected, the corresponding action is triggered. For example, an operator loads a particular fiducial marker 220 in the form of a matrix barcode on a smartphone 23, wherein the particular fiducial marker 220 is associated with stopping or pausing the system for a battery change. The operator presents the marker 220 to a camera mounted on the robot 1, wherein the system has access to a data cloud 14, which provides association of different actions 24 to each of the list of fiducial markers 22, which includes the particular fiducial marker 220. The operator is thus able to control the system at least to some degree, without actually having access to the control of the robot 1. By way of example, this may be useful for emergency situations, in that a non-operator is allowed to interact with the robot, e.g. to prevent actions, damage, etc..

Alternatively, or in addition, another particular fiducial marker 221 is fixedly placed within the environment, e.g. to make sure the robot 1 does not enter a particular area. Further markers (not shown) may be used as encoded survey control points (combined targets). Other markers may provide time-gated rules and actions such as "do not enter between 10am-11am".

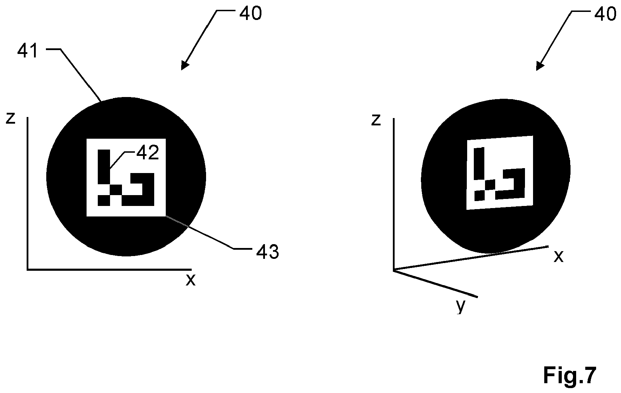

**Figure 7** depicts an exemplary embodiment of a fiducial marker 40. On the left, the fiducial marker 40 is shown in a frontal view. On the right, the fiducial marker 40 is shown in an angled view.

The fiducial marker comprises a visually detectable pattern, e.g. provided by areas of different reflectivity, different gray scales and/or different colors. The pattern comprises a circular feature 41 and inner geometric features 42, which are enclosed by the circular feature 41.

By way of example, the system is configured to determine the 6DoF (six degrees of freedom) pose of the fiducial marker. The 6DoF pose is derived by determining a 3D orientation of the pattern, i.e. a 3D orientation of a pattern plane, and by determining a 3D position of the pattern. For example, marker corners 43 (at least three) are analyzed to provide for determination of an angle of the pattern plane. The marker corners 43 may be determined using a camera on the UGV or the UAV, respectively.

The circular feature 41 provides for improved determination of the 3D orientation of the pattern plane. By way of example, the system is configured to generate an intensity image of the pattern by a scanning of the pattern with a lidar measurement beam of the lidar device, wherein the intensity image is generated by detection of an intensity of a returning lidar measurement beam. By identifying the image of the circular feature within the intensity image of the pattern and running a plane fit algorithm to fit an ellipse to the image of the circular feature the 3D orientation of the pattern plane is determined with improved precision. In addition, the center of the ellipse may be determined and used as aiming point for the lidar device to determine the 3D position of the pattern, thereby allowing to determine the 6DoF pose of the pattern.

The 3D orientation of the pattern, particularly the 6DoF pose of the pattern, are then taken into account for determining the local trajectory direction and/or in the evaluation of the further trajectory. For example, the 6DoF pose is taken into account for providing improved referencing of the lidar data with respect to the common coordinate system.

Although the invention is illustrated above, partly with reference to some preferred embodiments, it must be understood that numerous modifications and combinations of different features of the embodiments can be made. All of these modifications lie within the scope of the appended claims.

## Claims

1. System for providing 3D surveying of an environment by an autonomous robotic vehicle (1), the system comprising
• a simultaneous localization and mapping unit, SLAM unit, configured to carry out a simultaneous localization and mapping process, SLAM process, the SLAM process comprising reception of perception data providing a representation of the surroundings of the autonomous vehicle (1) at a current position, use of the perception data to generate a map of an environment, and determination of a trajectory of a path that the autonomous vehicle has passed within the map of the environment,
• a path planning unit, configured to determine a path to be taken by the autonomous robotic vehicle based on the map of the environment, and
• a lidar device (3) specifically foreseen to be mounted on the autonomous robotic vehicle (1) and configured to generate lidar data to provide a coordinative scan of the environment relative to the lidar device (3),
wherein the system is configured to generate the lidar data during a movement of the lidar device (3) and to provide a referencing of the lidar data with respect to a common coordinate system for determining a 3D survey point cloud of the environment,
**characterized in that**
• the lidar device (3) is configured to have a field-of-view of 360 degrees about a first axis (4) and 130 degrees about a second axis (6) perpendicular to the first axis and to generate the lidar data with a point acquisition rate of at least 300'000 points per second,
• the SLAM unit is configured to receive the lidar data as part of the perception data and, based thereof, to generate the map of the environment and to determine the trajectory of the path that the autonomous vehicle (1) has passed within the map of the environment, and
• the path planning unit is configured to determine the path to be taken (31) by carrying out an evaluation of a further trajectory (30, 31) within the map of the environment in relation to an estimated point distribution map for an estimated 3D point cloud, which is provided by the lidar device (3) on the further trajectory (30, 31) and projected onto the map of the environment.

2. System according to claim 1
**characterized in that**
the lidar device (3) is embodied as laser scanner, which is configured to generate the lidar data by means of a rotation of a laser beam (10) about two rotation axes (4, 6), wherein
• the laser scanner comprises a rotating body (11) configured to rotate about one of the two rotation axes (6) and to provide for a variable deflection of an outgoing and a returning part of the laser beam (10), thereby providing a rotation of the laser beam about the one of the two rotation axes, fast axis (6),
• the rotating body (11) is rotated about the fast axis (6) with at least 50 Hz and the laser beam is rotated about the other of the two rotation axes, slow axis (4), with at least 0.5 Hz,
• the laser beam (10) is emitted as pulsed laser beam, particularly wherein the pulsed laser beam comprises 1.5 million pulses per second, and
• for the rotation of the laser beam (10) about the two axes (4, 6) the field-of-view about the fast axis is 130 degrees and about the slow axis 360 degrees.

3. System according to claim 1 or 2,
**characterized in that**
the path planning unit is configured to receive an evaluation criterion defining different measurement specifications of the system, particularly different target values for the survey point cloud, and to take into account the evaluation criterion for the evaluation of the further trajectory (30, 31),
particularly wherein the evaluation criterion defines at least one of
• a desired path through the enviroment,
• a point density of the survey point cloud projected onto the map of the environment, particularly at least one of a minimum, a maximum, and a mean point density of the survey point cloud projected onto the map of the environment,
• an energy consumption threshold, particularly a maximum allowable energy consumption, for the system for completing the further trajectory and providing the survey point cloud,
• a time consumption threshold, particularly a maximum allowable time, for the system for completing the further trajectory and providing the survey point cloud,
• a path length threshold, particularly a minimal path length and/or a maximum allowable path length, of the further trajectory,
• a minimal area of the trajectory to be covered,
• a minimal spatial volume covered by the survey point cloud, and
• a minimum or maximum horizontal angle between a heading direction at the end of the trajectory of the path that the autonomous vehicle has passed and a heading direction at the beginning of the further trajectory.

4. System according to one of the preceding claims,
**characterized in that**
the path planning unit is configured to receive a path of interest (30) and is configured to optimize and/or extend the path of interest (30) to determine the path to be taken (31).

5. System according to one of the preceding claims,
**characterized in that**
• the system is configured to access identification information of a reference object (16) and assignment data, wherein the assignment data provide for an assignment of the reference object (16) to a trajectory specification within the vicinity of the reference object, particularly a further heading direction with respect to an outer coordinate system or with respect to a cardinal direction,
• the system comprises a reference object detector configured to use the identification information and, based thereof, to provide a detection of the reference object (16) within the environment, and
• upon the detection of the reference object the path planning unit is configured to take into account the trajectory specification in the evaluation of the further trajectory,
in particular wherein
• the system is configured to access a 3D reference model (18) of the environment, wherein the trajectory specification is provided relative to the 3D reference model, particularly wherein the trajectory specification provides a planned path (20) within the 3D reference model (18),
• the assignment data provide an assignment of the reference object (16) to a position within the 3D reference model (18), and
• the system is configured to determine a frame transformation between the map of the environment and the 3D reference model by taking into account the assignment of the reference object to the position within the 3D reference model.

6. System according to one of the preceding claims,
**characterized in that**
• the system comprises a fiducial marker (19, 40) configured to provide an indication of a local trajectory direction relative to the fiducial marker (19, 40), particularly a visible mark providing for visual determination of the local trajectory direction,
• the system comprises a fiducial marker detector configured to detect the fiducial marker and to determine the local trajectory direction, and
• the path planning unit is configured to take into account the local trajectory direction in the evaluation of the further trajectory (30, 31).

7. System according to claim 6,
**characterized in that**
• the fiducial marker (19, 40) is configured to provide a, particularly visible, indication of the directions of at least two, particularly three, of the three main axes which span the common coordinate system, wherein the system is configured to determine the directions of the three main axes by using the fiducial marker detector, and
• the system is configured to take into account the directions of the three main axes for providing the referencing of the lidar data with respect to the common coordinate system.

8. System according to claim 6 or 7,
**characterized in that**
the fiducial marker (19, 40) comprises a reference value indication, which provides positional information, particularly 3D coordinates, regarding a set pose of the fiducial marker (19, 40) in the common coordinate system or in an outer coordinate system, particularly a world-coordinate system, wherein the system is configured to derive the set pose and to take into account the set pose to determine the local trajectory direction, particularly by determining a pose of the fiducial marker (19, 40) in the common coordinate system or in the world coordinate system and carrying out a comparison of the determined pose of the fiducial marker and the set pose.

9. System according to one of claims 6 to 8,
**characterized in that**
the fiducial marker (19, 40) is configured to provide an indication of a corresponding action to be carried out by the system, wherein the system is configured to determine the corresponding action by using the fiducial marker detector, particularly wherein the indication of the corresponding action is provided by a visible code, particularly a barcode, more particularly a matrix barcode,
in particular wherein the corresponding action is at least one of
• a stop operation of the system,
• a pause operation of the system,
• a restart operation of the system,
• a return to an origin of a measurement task,
• an omission of entering an area in the vicinity of the fiducial marker, and
• a time-controlled entry into an area in the vicinity of the fiducial marker,
particularly wherein the path planning unit is configured to take into account the corresponding action in the evaluation of the further trajectory.

10. System according to one of claims 6 to 9,
**characterized in that**
• the fiducial marker (19, 40) comprises a visually detectable pattern, particularly provided by areas of different reflectivity, different gray scales and/or different colors, and
• the system is configured to determine a 3D orientation of the pattern by
∘ determining geometric features (41, 42, 43) in an intensity image of the pattern, wherein the intensity image of the pattern is acquired by a scanning of the pattern with a lidar measurement beam of the lidar device and a detection of an intensity of a returning lidar measurement beam, and
∘ carrying out a plane fit algorithm in order to determine an orientation of a pattern plane, by analyzing an appearance of the geometric features (41, 42, 43) in the intensity image of the pattern.

11. System according to claim 10,
**characterized in that**
• the pattern comprises a circular feature (41),
• the system is configured to identify an image of the circular feature (41) within the intensity image of the pattern, and
• the plane fit algorithm is configured to fit an ellipse to the image of the circular feature (41) and, based thereof, to determine the orientation of the pattern plane, particularly wherein the center of the ellipse is determined and aiming information for aiming with the lidar measurement beam to the center of the ellipse are derived,
in particular wherein the pattern comprises inner geometric features (42, 43), particularly comprising rectangular features, which are enclosed by the circular feature (41), more particularly wherein the inner geometric features (42, 43) are configured to provide the indication of the local trajectory direction and the system is configured to determine the local trajectory direction by analyzing the intensity image of the pattern and by taking into account the 3D orientation of the pattern.

12. System according to claim 10 or 11,
**characterized in that**
the system is configured
• to use the scanning of the pattern with the lidar device (3) and the detection of the intensity of the returning lidar measurement beam (10) to determine a first geometric shape of the pattern,
• to carry out a comparison of the first geometric shape with an expected shape of the pattern, particularly by taking into account the orientation of the pattern plane, more particularly the 3D orientation of the pattern, and, based thereof,
• to carry out an evaluation, particularly a determination, of an optical alignment of the optics of the lidar device,
in particular wherein the system comprises a camera (2) specifically foreseen to be mounted on the autonomous robotic vehicle and configured to generate camera data during a movement of the camera, wherein the system is configured
• to image the pattern by the camera (2) and to determine a second geometric shape of the pattern,
• to carry out a comparison of the second geometric shape with the expected shape of the pattern, particularly by taking into account the orientation of the pattern plane, more particularly the 3D orientation of the pattern, and
• to take into account the comparison of the second geometric shape with the expected shape of the pattern in the evaluation, particularly the determination, of the optical alignment of the optics of the lidar device (3).

13. System according to claim 12,
**characterized in that**
• the system is configured to carry out a system monitoring comprising a measurement of bumps and/or a vibration of the lidar device (3), and
• to automatically carry out the evaluation, particularly the determination, of the optical alignment of the optics of the lidar device as a function of the system monitoring.

14. System according to one of the preceding claims,
**characterized in that**
• the system comprises an on-board computing unit (13) specifically foreseen to be located on the autonomous robotic vehicle (1) and configured to carry out at least part of a system processing, wherein the system processing comprises carrying out the SLAM process, providing the referencing of the lidar data, and carrying out the evaluation of the further trajectory (30, 31),
• the system comprises an external computing unit (14, 15) configured to carry out at least part of the system processing,
• the system comprises a communication module configured to provide for a communication between the on-board computing (13) unit and the external computing unit (14, 15), and
• the system comprises a workload selection module configured
∘ to monitor an available bandwidth of the communication module for the communication between the on-board computing unit (13) with the external computing unit (14, 15),
∘ to monitor an available power of the on-board computing unit (13), the lidar device (3), the SLAM unit, and the path planning unit, and
∘ to dynamically change an assignment of at least part of the system processing to the on-board computing unit and the external computing unit depending on the available bandwidth and the available power assigned to the external processing unit.

15. System according to one of the preceding claims,
**characterized in that**
• the system is configured to receive an additional map of the environment generated by means of another SLAM process associated with another autonomous robotic vehicle, and
• the evaluation of the further trajectory (30, 31) takes into account the additional map of the environment by evaluating an estimated point distribution map for an estimated 3D point cloud provided by the lidar device (3) on a trajectory segment of the further trajectory (30, 31) within the additional map of the environment and projected onto the additional map of the environment.
